# EUROPEAN PATENT APPLICATION

(11) **EP 2 680 383 A1**
(43) Date of publication of application: **01.01.2014**
(21) Application number: 13173282.8
(22) Date of filing: 21.06.2013
(51) Int. Cl.: H02G 3/12, H02G 3/18, H02B 1/26

(54) **Housing device for electric contact blocks**

(30) Priority: 26.06.2012 IT MI20121119
(71) Applicant: Colacchio, Alfonso, 71017 Torremaggiore (FG) (IT); Colacchio, Matteo, 71017 Torremaggiore (FG) (IT); Colacchio, Giuseppe, 71017 Torremaggiore (FG) (IT)
(72) Inventor: Colacchio, Alfonso, 71017 Torremaggiore (FG) (IT); Colacchio, Matteo, 71017 Torremaggiore (FG) (IT); Colacchio, Giuseppe, 71017 Torremaggiore (FG) (IT)
(74) Representative: Lunati & Mazzoni S.r.L.

(57) **Abstract**

A housing device (1) [is provided] for electric contact blocks (10) comprising a holding structure (2) adapted to be secured to a wall and defining an insertion section (2a); a framework (3) adapted to be at least partly housed in said holding structure (2) and to be rigidly secured to an electric contact block (10); said framework (3) being secured in a motion-admitting manner to said holding structure (2) so as to define a first slide trajectory (1a) adapted to vary the portion of framework (3) housed inside the holding structure (2) and an additional slide trajectory (1 c) substantially transversal to the first slide trajectory (1 a), in which the first slide trajectory (1a) is substantially arched and in that said additional slide trajectory (1c) is substantially radial relative to said first slide trajectory (1a).

## Description

The present invention relates to a housing device for electric contact blocks of the type as recited in the preamble of the first claim.

In particular, the invention relates to a particular device adapted to be at least partially inserted in a wall and to house within it electrical switches, electricity sockets or other electric contact blocks permitting both their connection to a power supply grid and their practical use.

As known, currently the housing devices for electric contact blocks comprise a framework with housings for the electric contact blocks; an electrical contact box adapted to be embedded in the wall, defining a holding structure for the framework and having an insertion section for the electric cables; and a cover ring plate adapted to conceal from view the rims of the framework and of the electric contact box and provided with openings adapted to permit the use of the electric contacts.

The installation of such housing devices requires the operator to insert and firmly attach the electric contact box to the wall at a seat made in the wall so that the electric cables present in the wall enter the holding structure through the specific insertion section.

At this point the operator snap-fits the electric contacts to the framework, connects them to the electric cables present in the electrical contact box and then connects the framework to the box so as to make the electric contacts face outwards and thereby permit the practical use thereof.

After completing said operations, the operator concludes by fixing the cover plate to the framework.

The prior art described above has several significant drawbacks.

A first significant drawback is represented by the danger of the electric contacts and in particular, by the electricity sockets thus installed.

In fact the electricity sockets remain on view and are therefore within easy reach of children.

Moreover, by being always in view, they are subject to come into contact with fluids or other substances likely to cause short circuits and in some cases damage the electrical wiring system.

Another problem is represented by the fact that they do not permit an optimal positioning of the plugs.

In particular, the electricity sockets facing outwards, the plugs project from the wall, and consequently constitute an obstructive element.

A further defect lies therefore in the fact that the sockets, projecting from the wall, require that furniture and domestic appliances be suitably distanced from the wall and therefore determine a non-optimal positioning of the same.

In fact, in the case in which one wishes to position a domestic appliance adjacent to the wall, it needs to be placed at an appropriate distance from the electricity socket thus determining the presence between the appliance and the socket, of cables which get in the way.

In this situation the technical purpose of the present invention is to develop a housing device for electric contact blocks able to substantially overcome the inconveniences mentioned above.

Within the sphere of said technical purpose one important aim of the invention is to provide a housing device for electric contact blocks which is particularly safe.

Another important aim of the invention is to have a housing device which permits optimal positioning of the plugs and thus, of the domestic appliances.

The technical purpose and specified aims are achieved by a housing device for electric contact blocks as claimed in the appended Claim 1.

Preferred embodiments are described in the dependent claims.

The characteristics and advantages of the invention are clearly evident from the following detailed description of a preferred embodiment thereof, with reference to the accompanying drawings, in which:

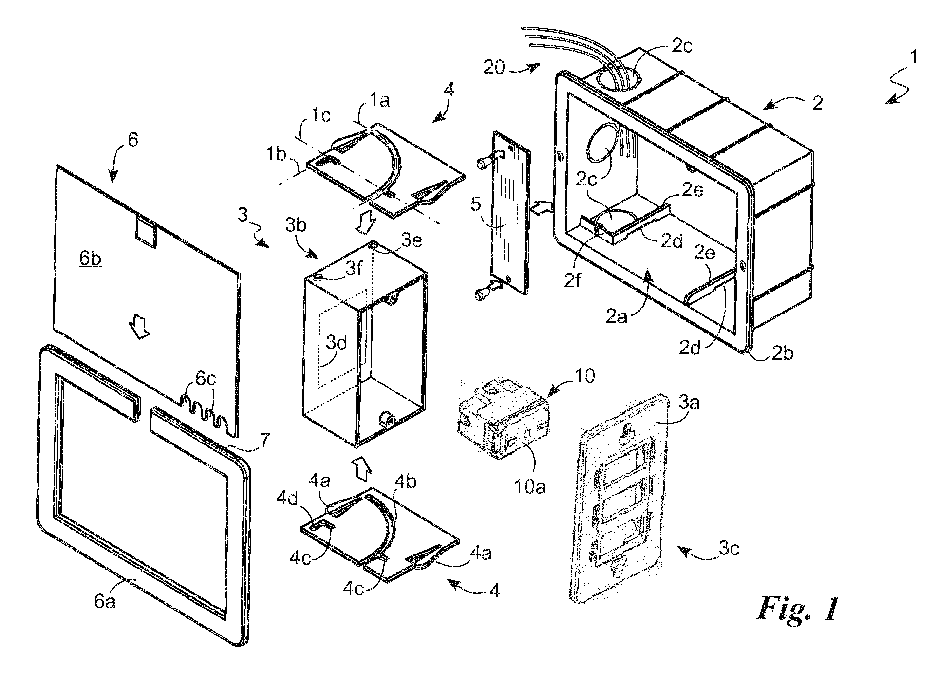

**Fig. 1** shows an exploded view of a housing device for electric contact blocks according to the invention;
**Figures 2a and 2b** shows two separate positions of the housing device for electric contact blocks according to the invention;
**Fig. 3** shows the possible movements in the device according to the invention in a schematic view.
**Fig. 4** shows an exploded view of a variant of housing device for electric contact blocks according to the invention;
**Figures 5a-5d** show different positions of the housing device in fig. 4; and
**Fig. 6** shows the possible movements in the device shown in Fig. 4 in a schematic view.

With reference to said drawings, reference numeral **1** globally denotes the housing device for electric contact blocks.

In particular, the invention relates to a housing device 1 adapted to be at least partially inserted in a wall and to house inside it one or more electric contact blocks **10,** such as switches and electricity sockets, permitting their connection to a power supply grid, suitably integrated in the wall, and placing the utilisation side **10a,** that is to say the surface from which it is possible to use the electric contact blocks, in such a way as to permit practical use of the electric contact blocks 10.

The housing device 1 comprises, mainly, a holding structure **2** adapted to be secured or embedded in the wall and defining an insertion section or open front side **2a** and a surround profile **2b** surrounding the insertion section 2a; and a framework **3** adapted to be at least partly housed in the holding structure 2 and to hold at least one electric contact block 10 and relative connection cables. The framework 3 has then a front section **3a.**

The holding structure 2 is substantially composed of a box-like element, such as a known electric contact box, preferably having a depth calculated perpendicular to the insertion section 2a substantially not greater than 8 cm and, preferably, substantially equal to 6 cm.

It also has at least one aperture **2c** adapted to permit the electric cables **20** of the power supply grid to be inserted in the housing 2a and then joined to the electric contact blocks as described below.

The framework 3 comprises a box-like container **3b** adapted to hold at least one electric contact block 10 and the relative connection cables; a cover plate **3c** adapted to be detachably connected, for example by means of screws, to the container 3b so as to define the front section 3a and adapted to be joined, for example by snap-fitting, to the electric contact blocks 10.

In detail, the container 3b houses the electric contact blocks 10 and the relative connection cables by means of the plate 3c placing their utilisation side 10a parallel to said front section 3a and in particular substantially on the same plane as the front section 3a.

The container 3b also has at least one access **3d,** adapted to enable the electric contact blocks 10 to be connected to electric cables 20 present in the holding structure 2 and appropriately, made on the opposite side to the front section 3a.

Advantageously, the framework 3 is adapted to be connected in a motion-admitting manner to the holding structure 2 in such a way as to be moved in relation to said holding structure 2 and, thus define two reciprocally separate and reciprocally transversal slide trajectories. In particular, three reciprocally separate slide trajectories are defined of which two are reciprocally transversal and two reciprocally orthogonal.

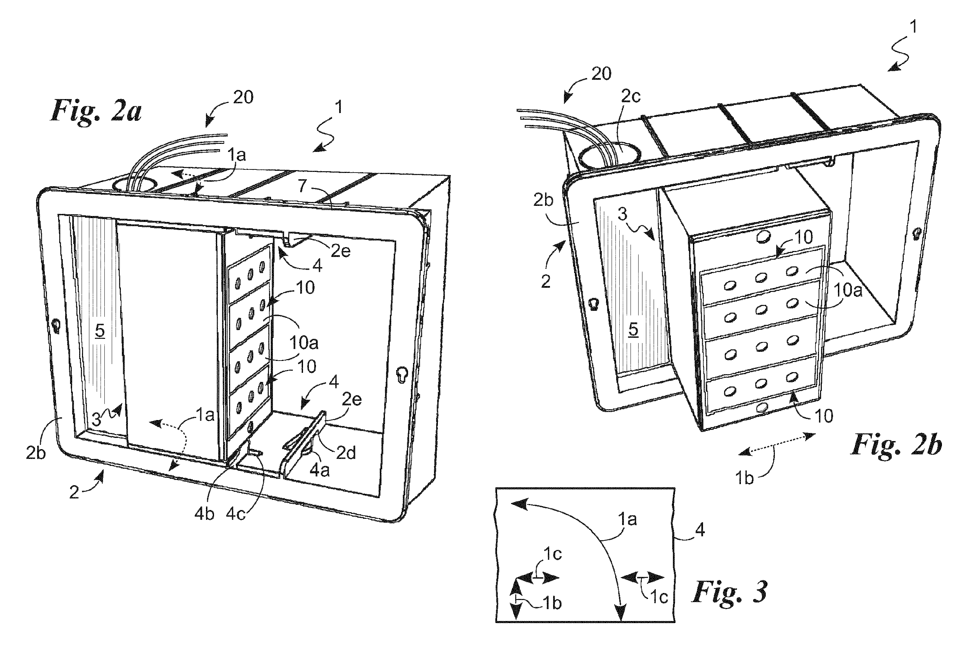

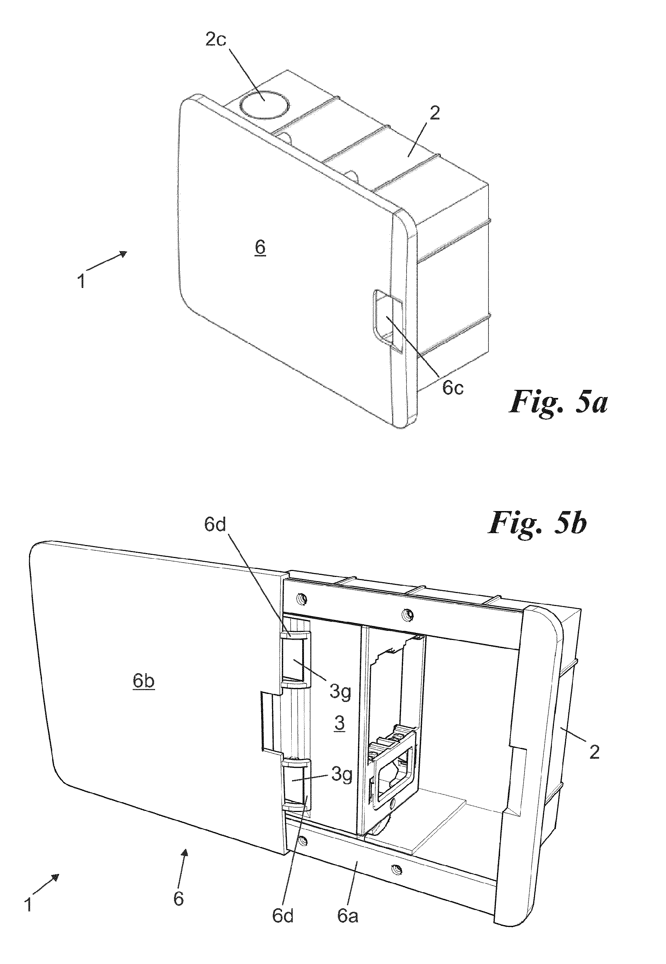

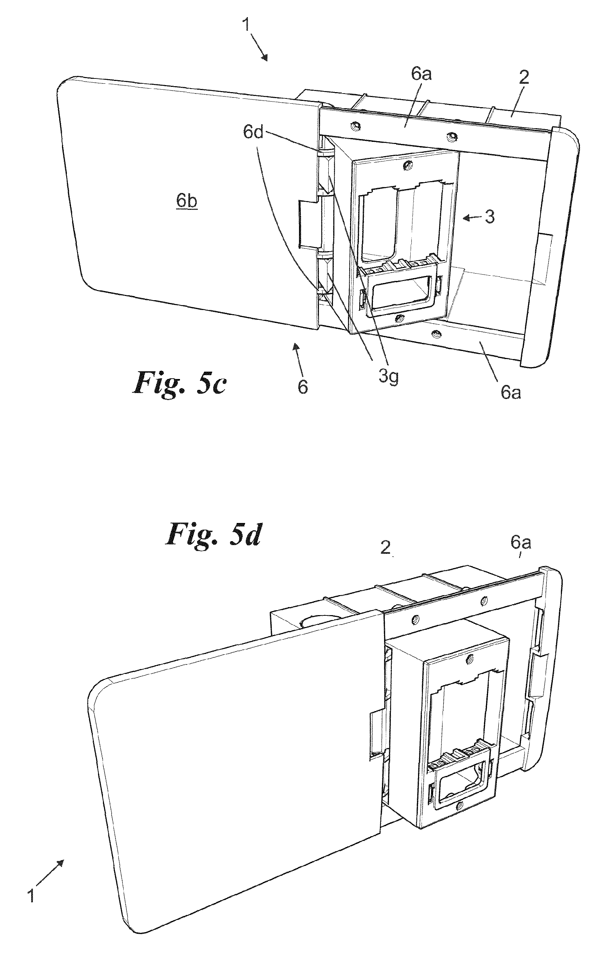

In detail, the connection between the holding structure 2 and framework 3 is made by guides defining a first slide trajectory **1a,** identifiable for example in guide and preferably arched, adapted to vary the portion of framework 3 housed inside the holding structure 2 defining a rest position (Figs. 2a, 5a), wherein the framework 3 is practically entirely housed in the holding structure 2, an intermediate position (Figs. 5b, 5c) in which the framework 3 protrudes at least partly from the holding structure 2 and an open position (Figs. 2b, 5d) in which the framework 3 does not engage the slide trajectory 1a permitting easy connection manoeuvres of the cables 20 to the electric contact blocks 10; and a second slide trajectory **1b** extending between said intermediate position and an intermediate work position preparatory to the subsequent trajectory which does not permit engagement of the slide trajectory 1a on account of the changed centre of the circumference identified by the trajectory 1a.

The connection between the holding structure 2 and framework 3 further defines an additional slide trajectory **1c** extending between the intermediate position and a work position represented by a steady balance position at least in a direction substantially perpendicular to said front section 3a in which the framework 3 partly protrudes from the holding structure 2. More in particular, the additional trajectory 1c extends between the aforesaid intermediate work position and the work position.

In detail, the first slide trajectory 1a is substantially arched so as to vary the angle of inclination between the insertion section 2a and front section 3a and, more in particular, define a rest position, wherein the front section 3a proves substantially perpendicular to the insertion section 2a, and an intermediate position in which the sections 2a and 3a are substantially parallel to each other. Preferably, the first slide trajectory 1a defines an arch of substantially 90°. the second slide trajectory 1b is adapted to move the framework 3 in relation to the holding structure 2 reducing the protrusion in relation to the intermediate position and preparing its next movement according to the additional slide trajectory 1c while maintaining the substantial parallelism between the sections 2a and 3a.

The additional slide trajectory 1c is adapted to move the framework 3 in relation to the holding structure 2 keeping the inclinations between the sections 2a and 3a practically constant, and consequently substantially perpendicular to the first slide trajectory 1a in correspondence with the intermediate position.

In particular, the additional slide trajectory 1c is substantially radial to the first slide trajectory 1a and perpendicular to the second slide trajectory 1b and, more in particular, substantially parallel to the insertion direction 2a so as to move the framework 3 in relation to the holding structure 2 keeping the framework 3 in the work position, that is keeping the sections 2a and 3a substantially parallel to each other.

In order to permit the definition of the trajectories described above 1a, 1b and 1c, the housing device 10 has at least one connection plate **4,** preferably two, adapted to place themselves between the framework 3 and holding structure 2 so as to permit the connection in a motion-admitting manner of such components to each other.

The plate 4 is adapted to be firmly connected to the holding structure 2 by means of engagement teeth **4a** adapted to insert themselves in cavities **2d** made along special fins **2e** protruding internally to the holding structure 2. Alternatively or in addition, it is adapted to be firmly connected to the holding structure 2 for example by screws positioned on the inside of the structure. The plate 4, in addition, has a plurality of guides adapted to be passed through by two pins **3e** and **3f** protruding from the framework 3 so as to permit said framework to be alternately moved according to one of the trajectories 1a, 1b or 1c.

The connection plate 4 thus presents a first guide **4b** of an arched shape and defining the first slide trajectory 1a, and one or more, preferably two, second guides **4c,** one for each engagement pin 3e and 3f, adapted to permit the framework to move according to the additional slide trajectory 1c and characterised by directions of extension substantially parallel to the insertion section 2a and appropriately substantially coincident with each other.

In order to ensure the correct engagement of the framework 3 with the connection plate 4 and thus to the holding structure 2, the plate 4 presents, in addition, a third guide **4d** identifying the second slide trajectory 1b and characterised by a direction of extension transversal in relation to the front section 2a, and in particular, substantially perpendicular to the front section 2a.

The initial part of the guide 4d, constituting the start-of-travel of the slide trajectory 1b, is engaged by the pin 3f protruding from the framework 3 acting as a rotation axis permitting the open, intermediate and rest position of said framework 3. The initial part of the guide 4d, identifying the start-of-travel of the slide trajectory 1a, is engaged by the pin 3e protruding from the framework 3 and acting as a cursor in the guide defining said trajectory 1a. The final part of the guide 4d and the corresponding initial part of the guide 4b, identifying the end-of-travel of the slide trajectory 1b, constitute the intermediate preparatory work position for the pins 3e and 3f to engage the guides 4c.

Lastly, the housing device 1 comprises a covering **5** and a protection apparatus **6** adapted to conceal the cables 20 from view.

The covering 5 is composed of a plate or other similar element suitable for being inserted in the holding structure 2 so as to conceal the cables 20 found between the aperture 2c of the structure 2, and the access 3d present in the container 3b.

It is therefore suitable to be connected for example by screws or snap-fitted to additional fins 2f protruding from the holding structure 2 so that the covering 6, holding structure 2 and container 3b define a housing camber for the electric cables 20.

The protection apparatus 6 is adapted to be connected to the connection structure in correspondence with the surround profile 2b so that, as described further below, it is able to conceal any electric plug engaged with one of the electric contact blocks 10.

Said protection apparatus 6 comprises a frame **6a** adapted to be firmly connected to the surround profile 2b, and a protection plate **6b** adapted to be connected in a motion-admitting manner to the frame 6a so as to substantially superpose the insertion section 2a when the framework 3 is in the rest position.

In detail, the frame 6a defines a translation groove **7** adapted to enable translation of the protection plate 6b according to a direction of translation substantially parallel to said section, and a rabbet adapted to keep the cover plate 6b in the correct position.

The protection plate 6b has one or more through holes **6c** adapted to enable the passage of electric cables 20 connecting the sockets associated to the electric contact blocks 10, present in the housing device 1, and the relative external electric appliances. In particular, the through holes 6c are made in correspondence with a rim of the said plate 6b so as to come into contact with said rabbet and, as described further below, enable the external electric appliance to be connected to one of the electrical contact blocks 10.

Moreover, in particular in the embodiment shown in Figs. 3-5d, the device 1 comprises engagement means adapted to automatically place said framework 3 in the rest position, when the protection apparatus 6 prevents access to the device 1 and to automatically place said framework 3 in the work position, when the protection apparatus 6 permits access to the device 1.

Such engagement means preferably comprise engagement elements **3g** and in particular two engagement teeth, positioned on the framework 3 and adapted to engage in specific seats **6d** present in the protection apparatus 6.

The functioning of the engagement means consisting of the engagement elements 3g and of the seats 6d, is illustrated in detail in Figs. 5a -5d.

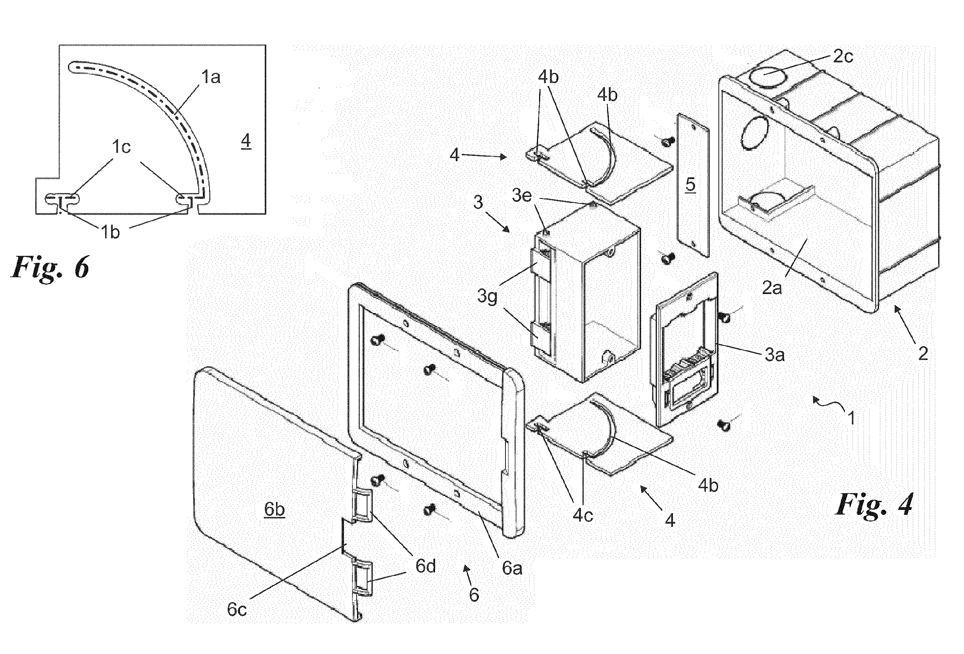

In this case, in addition, the additional slide trajectory 1c is substantially radial towards the inside of the circumference defining the first slide trajectory 1a, while the second slide trajectory 1b is preferably displaced from the first slide trajectory (Fig. 6).

The assembly of a housing device for electric contact blocks, described above in a structural sense, is as follows.

Initially, the operator inserts the structure 2 in a special cavity made previously in the wall, arranging the electric cables 20 inside said holding structure 2 through the apertures 2c.

The operator inserts the pins 3f of the container 3b in the guides 4d of the plates 4 at the start of travel point of the slide trajectory 1b acting as a rotation axis to obtain an open position of the framework 3; joins the two plates 4 and the framework 3 to the holding structure 2 inserting the engagement teeth 4a in the slots 2d and connecting the plates 4 to the holding structure 2 by means, for example, of the small screws positioned inside the structure; inserts the electric cables 20 in the container 3b making them pass through the opening 3d; joins the electric cables 20 to the electric contact blocks 10; snap-fits the electric contacts blocks to the cover plate 3c; joins the plate 3c to the container 3b by means of screws; and lastly, inserts the pins 3e in the respective guides 4b so as to permit the intermediate and rest position of the framework 3.

At this point the operator moves the framework 3 along the first guide, that is according to the first slide trajectory 1a, positioning said framework 3 in the rest position and, then, completes assembly of the housing device 1 connecting the covering 5 and the protection apparatus 6 to the holding structure 2 respectively in correspondence with the additional fins 2f and the surround profile 2b.

When the operator wishes to use one of the electric contact blocks 10, for example an electric socket present in the device 1, he moves the protection plate 6b away, and then moves the framework 3 into the rest position.

In particular, the operator moves the framework 3 according to the first trajectory 1a until the sections 2a and 3a are substantially parallel to each other and the framework has reached the intermediate position, then translates said framework 3 according to the second slide trajectory 1b, that is along the second guide 4d and along the beginning of the guide 4b, positioning it in an intermediate work position and moves the framework 3 according to the slide trajectory 1c along the third guide 4c.

Said movement of the framework 3 may take place by means of sliding the protective plate 6d, directly connected to the seats 6d. The seats 6d, in their movement during opening (Figs. 5b-5d) interfere with the engagement elements causing the movement of the framework 3 along the first and the second trajectory 1a and 1b and also the slide trajectory 1c.

Conversely, during the closure of the protection plate 6b, the seats 6d, or the plate 6b directly, interfere in their path with the engagement elements 3g or with the framework 3 causing the movement of said framework 3 along the slide trajectory 1c, the second and the first trajectory 1a and 1b.

The operator then inserts the plug in the socket, that is in the electric contact block 10, exerting an insertion force which thanks to the steady balance in a direction perpendicular to the front section 3a, given by the parallelism between the sections 3a and 2a and the front 10a, proves substantially perpendicular to the utilisation side 10a, and thus perpendicular to the sections 2a and 2b of the additional slide trajectory 1c, that is to the third guide 4c.

Having inserted the plug in the electric contact block 10, the operator returns the framework 3 to the rest position thus positioning the electric plug inside the holding structure 2 and replaces the cover plate 6b so that the cable 20 joined to the electric plug is inserted in one of the through holes 6c.

### The invention achieves some important advantages.

A first important advantage lies in the extreme simplicity of use of the housing device 1.

In fact, the presence of three separate slide trajectories 1a, 1b and 1c transversal and perpendicular to each other enables optimal positioning of the electric plugs.

In particular, the assembly device, defining a rest position in which the framework 3 is substantially totally housed inside the structure 2, enables the electric contact blocks 10 and the plugs connected to them to be housed inside the device 1 and thereby not to constitute an obstruction.

In particular, thanks also to the presence of the holes 6c in the protection plate 6b, such arrangement of the electric plugs makes it possible to place the domestic appliances adjacent to the plugs and thereby avoid the presence of obstructive cables.

Said particular rest position and the structure of the housing device 1 permit its housing in even thin walls, such as dividing walls having a thickness of 8 cm - 10 cm.

Moreover, said easy and practical use of the device 1 is ensured by the aforementioned steady balance in the work position which permits easy insertion and removal of the electric plugs.

In fact, such perpendicular nature of the insertion force and additional slide trajectory 1c permits the framework 3 to discharge the insertion force on the rest of the device so as to remain substantially stationary during such action.

Another advantage, given by the possibility of placing the domestic appliance adjacent to the electric contact blocks, may be identified in the possibility of making an optimal use of space thanks to the fact that the electric contact blocks 10 do not constitute a limitation to the possible positioning of furniture and domestic appliances in a room, and consequently permit the arrangement of furniture and domestic appliances in any position in relation to the electric contact blocks 10, and thus to the device 1.

A further important advantage lies in the fact that the electric contact blocks 10 being practically totally housed inside the holding structure 2, are not visible and are therefore difficult to reach by children.

Moreover, thanks to the protection plate 6b, suitably provided with a perimetral sheath to waterproof the entire device, the electric contact blocks 10 are protected from coming into contact with fluids or other substances which would cause them to short-circuit and in some cases, damage the electric wiring system.

Another advantage of no less importance is the presence of the protection plate 6b and covering 5 which, by concealing the electric cables and the contact blocks 10 from view, constitute an advantage of the housing device 1.

Further advantages are achieved by the device 1 including the engagement means consisting of the engagement elements 3g and of the seats 6d. Such engagement means permit a faster and simple arrangement in the work or rest position of the device 1.

Modifications and variations may be made to the invention described herein without departing from the scope of the inventive concept. All the elements as described and claimed herein may be replaced with equivalent elements and the scope of the invention includes all other details, materials, shapes and dimensions.

## Claims

1. A housing device (1) for electric contact blocks (10) comprising a holding structure (2) adapted to be secured to a wall and defining an insertion section (2a); a framework (3) adapted to be at least partly housed in said holding structure (2) and to be rigidly and fixedly secured to at least one of said electric contact blocks (10), said framework comprising a front section (3a), said framework (3) being secured in a motion-admitting manner to said holding structure (2), and guides (4b, 4c) are provided between said framework (3) and holding structure (2), which guides define a first slide trajectory (1a) defining a rest position in which said framework (3) is substantially fully housed in said holding structure (2) and an intermediate position in which said framework (3) protrudes at least partly from said holding structure (2) and an additional slide trajectory (1c) extending between said intermediate position and a work position represented by a steady balance position at least in a direction substantially perpendicular to said front section (3a) in which said framework (3) partly protrudes from said holding structure (2), said housing device (1) being **characterised in that** said first slide trajectory (1a) is substantially arched and **in that** said additional slide trajectory (1c) is substantially radial relative to said first slide trajectory (1a).

2. A housing device (1) as claimed in claim 1, wherein said slide trajectories (1a, 1c) are substantially perpendicular to each other in correspondence with said work position.

3. A housing device (1) as claimed in one or more of the preceding claims, in which said additional slide trajectory (1c) is substantially parallel to said insertion section (2a).

4. A housing device (1) as claimed in one or more of the preceding claims, comprising at least one plate (4) adapted to be inserted between said framework (3) and said holding structure (2) and defining said guides (4b, 4c).

5. A housing device (1) as claimed in the preceding claim, wherein the guides (4b, 4c) are furrows formed in said at least one plate (4) and adapted to be engaged in pins protruding from said framework (3).

6. A housing device (1) as claimed in one or more of the preceding claims, comprising a protection plate (6b) adapted to be superposed on said front section (2a) when said framework (3) is in the rest position.

7. A housing device (1) as claimed in the preceding claim, comprising a frame (6a) adapted to be secured to said holding structure (2) and wherein said frame (6a) has a translation groove (7) adapted to enable translation of said protection plate (6b).

8. A housing device (1) as claimed in the preceding claim, comprising engagement means adapted to automatically place said framework (3) in said rest position, when said protection apparatus (6) prevents access to said housing device (1) and to automatically place said framework (3) in said work position, when said protection apparatus (6) permits access to said device (1).
